# EUROPEAN PATENT SPECIFICATION

(11) **EP 3 189 709 B1**
(45) Date of publication and mention of the grant of the patent: **02.06.2021**
(21) Application number: 15763781.0
(22) Date of filing: 21.09.2015
(51) Int. Cl.: H05B 45/37, H05B 45/44

(54) **LED DRIVER**
LED-TREIBER
PILOTE DE DEL

(43) Date of publication of application: 12.07.2017
(73) Proprietor: Signify Holding B.V., 5656 AE Eindhoven (NL)
(72) Inventor: FANG, Liang, Peachtree City, GA 30269 (US); SHILEY, William, Lee, Senoia, GA 30276 (US); MOAN, James, Peachtree City, GA 30269 (US); ANDREWS, James, Christopher, Mabelton, GA 30126 (US)
(74) Representative: Verweij, Petronella Daniëlle
(86) International application number: PCT/US2015/048410
(87) International publication number: WO 2016/036989

(56) References cited:
- US-A1- 2011 121 744
- US-A1- 2011 267 375
- US-A1- 2012 217 889
- US-A1- 2013 049 622
- US-A1- 2013 063 047
- US-A1- 2013 127 362
- US-A1- 2013 249 405
- US-A1- 2014 125 248
- US-A1- 2014 176 008

## Description

### TECHNICAL FIELD

Embodiments of the technology relate generally to a system for powering one or more light emitting diodes (LEDs), and more specifically to utilizing a combination of pulse width modulation (PWM) and constant current reduction (CCR) for dimming across a range of intensities.

### BACKGROUND

For illumination applications, light emitting diodes (LEDs) offer substantial potential benefit associated with their energy efficiency, light quality, and compact size. However, to realize the full potential benefits offered by light emitting diodes, new technologies are needed. For instance, relative to incandescent lights, light emitting diodes typically have different electrical characteristics that warrant different dimming approaches.

Accordingly, there are needs in the art for technology to manage illumination produced by one or more light emitting diodes. Need exists for technology to dim a light emitting diode, so that a user can adjust output of a light emitting diode to provide a desired level of illumination. Need further exists for fine adjustment of a light emitting diode's light output across a wide range of intensities. A capability addressing one or more such needs, or some other related deficiency in the art, would support improved illumination systems and more widespread utilization of light emitting diodes in lighting applications.
Attention is drawn to US 2013 049 622 A1, which shows a circuit which includes a switching power converter and a load current management circuit. The switching power converter provides a first current that varies between a first current value and a second current value in response to a dimming control signal. The load current management circuit provides a second current that varies between the second current value and a third current value in response to the dimming control signal. The second current varies in accordance with the first current. Further, US 2013 063 047 A1 is related to an LED driver for controlling the intensity of an LED light source which includes a power converter circuit for generating a DC bus voltage, an LED drive circuit for receiving the bus voltage and controlling a load current through, and thus the intensity of, the LED light source, and a controller operatively coupled to the power converter circuit and the LED drive circuit. The LED drive circuit comprises a controllable-impedance circuit adapted to be coupled in series with the LED light source. The controller adjusts the magnitude of the bus voltage to a target bus voltage and generates a drive signal for controlling the controllable-impedance circuit. To adjust the intensity of the LED light source, the controller controls both the magnitude of the load current and the magnitude of the regulator voltage. The controller controls the magnitude of the regulator voltage by simultaneously maintaining the magnitude of the drive signal constant and adjusting the target bus voltage. Further, US 2011 121 744 A1 is related to a load control device for controlling the amount of power delivered from an AC power source to an electrical load which is operable to conduct enough current through a thyristor of a connected dimmer switch to exceed rated latching and holding currents of the thyristor. The load control device comprises a controllable-load circuit operable to conduct a controllable-load current through the thyristor of the dimmer switch. The load control device disables the controllable-load circuit when the phase-control voltage received from the dimmer switch is a reverse phase-control waveform. When the phase-control voltage received from the dimmer switch is a forward phase-control waveform, the load control device is operable to decrease the magnitude of the controllable-load current so as to conduct only enough current as is required in order to exceed rated latching and holding currents of the thyristor.

### SUMMARY

In accordance with the present invention, an apparatus as set forth in claim 1 is provided. Further embodiments are inter alia disclosed in the dependent claims. In one aspect of the disclosure, a lighting system can comprise a luminaire and a dimmer switch that controls the luminaire. The luminaire can comprise at least one light emitting diode and a driver for the light emitting diode. The driver can utilize a combination of pulse width modulation and constant current reduction to control the level of illumination emitted by the light emitting diode according to input from the dimmer switch. For example, pulse width modulation can control a lower intensity range of the light emitting diode and constant current reduction can control an upper intensity range of the light emitting diode.

The foregoing discussion of certain aspects of the disclosure is for illustrative purposes only. Various aspects of the technology may be more clearly understood and appreciated from a review of the following text and by reference to the associated drawings and the claims that follow. Other aspects, systems, methods, features, advantages, and objects of the present technology will become apparent to one with skill in the art upon examination of the following drawings and text. It is intended that all such aspects, systems, methods, features, advantages, and objects are to be included within this description and covered by this application and by the appended claims of the application.

### BRIEF DESCRIPTION OF THE FIGURES

Reference will be made below to the accompanying drawings.
Figure 1 illustrates an example lighting system in accordance some embodiments of the disclosure.
Figure 2 illustrates a functional block diagram for an example of a light emitting diode driver in accordance with some embodiments of the disclosure.
Figure 3 illustrates an example of a process for controlling electricity for a light emitting diode in connection with dimming in accordance some embodiments of the disclosure.
Figure 4 illustrates an example plot for operating a light emitting diode under a constant current reduction mode in connection with dimming in accordance some embodiments of the disclosure.
Figure 5 illustrates an example plot for operating a light emitting diode under a pulse width modulation mode in connection with dimming in accordance some embodiments of the disclosure.
Figure 6 illustrates an example plot for operating a light emitting diode under a combination of pulse width modulation and constant current reduction modes in accordance some embodiments of the disclosure.

The drawings illustrate only example embodiments and are therefore not to be considered limiting of the embodiments described, as other equally effective embodiments are within the scope of the appended claims. The elements and features shown in the drawings are not necessarily drawn to scale, emphasis instead being placed upon clearly illustrating principles of the embodiments. Additionally, certain dimensions or positionings may be exaggerated to help visually convey certain principles. In the drawings, similar reference numerals among different figures designate like or corresponding, but not necessarily identical, elements.

### DESCRIPTION OF EXAMPLE EMBODIMENTS

As will be discussed in further detail below, dimming an LED-based lighting fixture utilizing a combination of pulse width modulation and constant current reduction can support fine control of light intensity over a broad intensity range. Additionally, the pulse width modulation and constant current reduction can be implemented utilizing instructions stored in memory, such as firmware, and executed by a microprocessor or other controller.

In certain embodiments of the disclosure, driver current for one or more light emitting diodes can be set over a wide range via firmware, for example between 0.2 amps to 2.5 amps. Further, one or more light emitting diodes can be driven smoothly and/or continuously across a dimming range, for example between 100 percent and 1 percent.

In some example embodiments, a point of load (POL) DC-to-DC controller can increase or decrease direct current (DC) voltage to match a light emitting diode's forward voltage and overcome any line losses. The term "point of load DC-to-DC controller," as used herein, generally refers to a DC-to-DC voltage controller that is regulated according to feedback at the load, for example according to a sense resistor.

The term "forward voltage," as used herein in reference to a light emitting diode, refers to a threshold voltage applied between the light emitting diode's anode and cathode (with the anode voltage at a higher potential than the cathode voltage) that causes the light emitting diode to conduct current (and thus typically emit light).

In some embodiments of the disclosure, a DC/DC buck/boost circuit can implement the DC voltage adjustments. The circuit can function under (and switch among) buck mode, boost mode, and buck/boost mode according to input voltage, for example. A buck/boost converter is a type of DC-to-DC converter that exhibits an output voltage magnitude that is either greater than or less than its input voltage magnitude.

In some embodiments, the driver can utilize constant current reduction in higher current ranges in order to limit acoustic noise from the fixture. In some embodiments, constant current reduction can be utilized between 2.5 amps and 0.8 amps of current, for example.

The term constant current reduction (CCR), as used herein in reference to a light emitting diode, generally refers to gradually reducing output of the light emitting diode by making corresponding gradual reduction in the current flowing into the light emitting diode. In example embodiments, analog or linear dimming are within the scope of the term 'constant current reduction.' In some example embodiments, constant current reduction may be implemented using a current profile that comprises voltage or current steps.

In some embodiments of the disclosure, the driver may further utilize pulse width modulation (PWM) for dimming at lower intensities, thereby achieving smooth and accurate control of light level. For example, in one embodiment, pulse width modulation initiates for current below 0.8 amps.

The term "pulse width modulation," as used herein in reference to a light emitting diode, generally refers to controlling the intensity of light that the light emitting diode emits by feeding the light emitting diode pulses of electricity, where the light emitting diode generates light during each pulse and is off between pulses. Thus, light output can be increased by extending the duration of each pulse or by shortening the time between each pulse. And, light output can be decreased by shortening the duration of each pulse or by extending the time between each pulse.

In some example embodiments, a process executed from firmware-based instructions selects and sets driver output current that feeds a light emitting diode. In some such embodiments, the driver operates between 2.5 amps and 0.2 amps without any hardware changes. In other words, instructions executing on a controller or microprocessor can control the output of a commercially available light emitting diode driver so that the driver supplies pulse width modulated power at certain times and constant current power at other times. For example, a microprocessor and a digital-to-analog converter (DAC) can vary the voltage so that the hardware remains fixed while controlling light emitting diode current throughout a target range. Accordingly, accuracy and resolution of the microprocessor and the digital-to-analog converter can provide precise light intensity control and fine intensity adjustment.

For example, in accordance with the data shown in Table 1 below, a light emitting diode current (I_{LED}) can be programmed by the sense resistor 275 (R_{LEDsense}), in series with the LED strings. The Ref in CCR Controller 210 (Vctrl) would typically be higher than a threshold (here we use the example value of 1.3 Volts) to get the full-scale 100mV threshold across the sense resistor. Vctrl can also be used to adjust the I_{LED}. When the Vctrl voltage is less than the threshold, I_{LED} = (Vctrl -200mV)/(10 x R_{LEDsense}). When the Vctrl voltage is higher than the threshold, the I_{LED} is regulated to I_{LED} = 100mV / R_{LEDsense}. In the Table 1, R_{LEDsense} is 40mQ, which is an example value.

The term "sense resistor," as used herein in reference to a light emitting diode, generally refers to a resistor that is in a path of current flowing through the light emitting diode, where voltage across the sense resistor correlates to current flowing through the sense resistor.

Accordingly, a circuit (which can comprise a hardware implementation with accompanying code) can control light emitting diode current throughout a broad target range of intensities. For example, if R_{Ledsense} = 40 mΩ, when V_{CTRL} ≥ 1.3Vdc, then I_{LED} (amp) = 100mV / 40 mQ = 2.50 amps.

**Table 1: V**

| | **_{CTRL} vs. I_{LED}** |
|---|---|
| **V_{CTRL} (mV)** | **I_{LED} (amp)** |
| ≥ 1300 | 2.5 |
| 1160 | 2.4 |
| 1120 | 2.3 |
| 1080 | 2.2 |
| 1040 | 2.1 |
| 1000 | 2.0 |
| 960 | 1.9 |
| 920 | 1.8 |
| 880 | 1.7 |
| 840 | 1.6 |
| 800 | 1.5 |
| 760 | 1.4 |
| 720 | 1.3 |
| 680 | 1.2 |
| 640 | 1.1 |
| 600 | 1.0 |
| 560 | 0.9 |
| 520 | 0.8 |
| 480 | 0.7 |
| 440 | 0.6 |
| 400 | 0.5 |
| 360 | 0.4 |
| 320 | 0.3 |
| 280 | 0.2 |

Continuing with the example, the microprocessor operating voltage is 3.3 V DC. Since 10 bit resolution of a 3.3 V DC rail is 3300mV/1024 =3.2mv/bit, 280mV control voltage can be provided within 1.1% (3.2mv/280mV = 1.1%) accuracy.

Representative embodiments can support a hybrid dimming approach. In other words, the driver circuit can utilize constant current reduction and pulse width modulation in combination, either sequentially or concurrently.

For example, constant current reduction can initiate above 0.8 amps of drive current (or some other appropriate threshold set in firmware), and pulse width dimming can be utilized below 0.8 amps of drive current. As discussed above, the microprocessor and associated digital-to-analog converter can set the control voltage.

Some example parameters for one representative embodiment of a driver circuit follow immediately below, without limitation:
- DC/DC switching frequency is 300KHz. Minimum PWM pulse is at least 6 switching cycles (that is 300KHz/6 = 50KHz), and the period of 50KHz is 20µs.
- Assume PWM frequency is 200 Hz, the waveform has a period of 5,000µs.
- If I_{LED} (the current flowing through the light emitting diode) is 0.825 amps, through PWM, the minimum I_{LED} is 825mA ^{∗} 20/5000 = 3.3mA. Dimming depth is 3.3/825 = 0.4%.
- If I_{LED} is 0.2 amps, through PWM, the minimum I_{LED} is 200mA ^{∗} 20/5000 = 0.8mA. Dimming depth is 0.8/200 = 0.4%.

Accordingly, a combination of constant current reduction and pulse width modulation can achieve sufficient dimming depth.

Some representative embodiments will be further described hereinafter with example reference to the accompanying drawings that describe representative embodiments of the present technology. The technology may, however, be embodied in many different forms and should not be construed as limited to the embodiments set forth herein; rather, these embodiments are provided so that this disclosure will be thorough and complete, and will fully convey the scope of the technology to those appropriately skilled in the art.

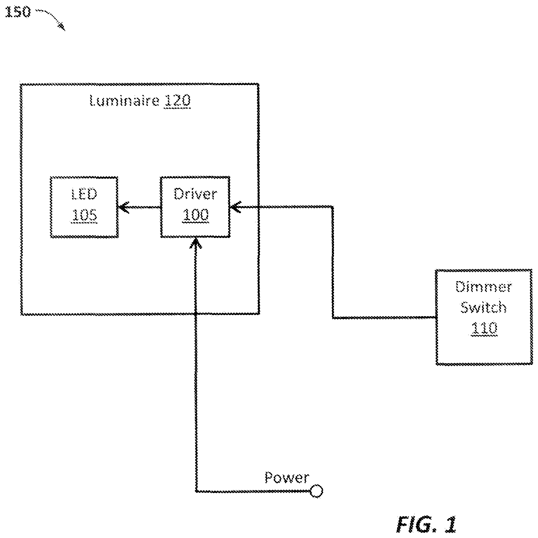

Referring now to Figure 1, this figure illustrates an example lighting system 150 in accordance some embodiments of the disclosure. A luminaire 120 of the lighting system 150 comprises at least one light emitting diode 105 and a driver 100. In some example embodiments, the luminaire 120 comprises a single light emitting diode 105, for example a chip-on-board (CIB) light emitting diode. In some other embodiments, the luminaire 120 comprises two or more light emitting diodes 105, which may be configured in an array or other appropriate arrangement.

The driver 100 receives a dimming signal from a dimmer switch 110 and controls the electrical feed to the light emitting diode 105 according to the dimming signal. In some embodiments, the driver 100 receives and is powered by DC electricity. In some other embodiments, the driver 100 receives and is powered by alternating current (AC) electricity.

As discussed above, the driver 100 controls the level of light emitted by the light emitting diode 105 using a combination of pulse width modulation and constant current reduction. For dimming across an upper portion of the light emitting diode's intensity range, the driver 100 can dim using constant current reduction. For diming across a lower portion of the light emitting diode's intensity range, the driver 100 can dim using pulse width reduction.

Accordingly, when the dimmer switch 110 prompts the driver 100 to control the light emitting diode 105 to emit light lower a threshold level, the driver 100 can output pulse width modulated current. And when the dimmer switch 110 prompts the driver 100 to control the light emitting diode 105 to emit light above the threshold level, the driver 100 can output constant current reduction current. In an example embodiment, the threshold level represents a point at which the driver switches between using constant current reduction to control the light emitted from the light emitting diode 105 and using pulse width modulation to control the light emitted from the light emitting diode 105.

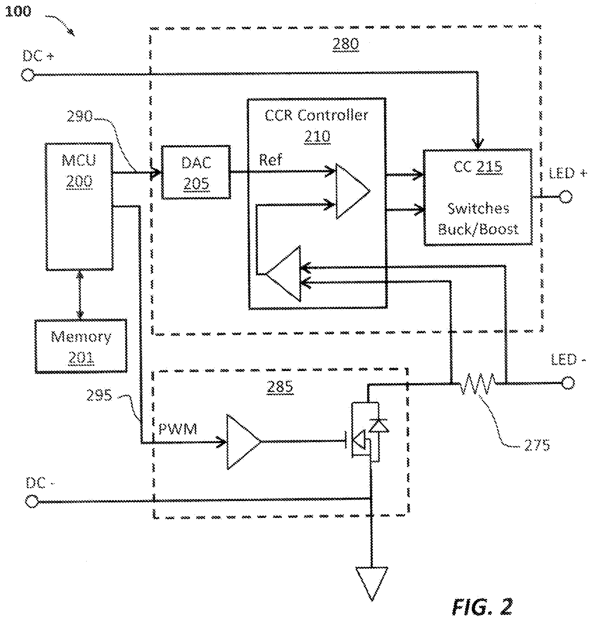

Referring now to Figure 2, this figure illustrates a functional block diagram for an example of the driver 100 illustrated in Figure 1 in accordance with some embodiments of the disclosure. As illustrated, the driver 100 comprises a microcontroller 200 that can execute a dimming process for the light emitting diode(s) 105 via implementing a combination of pulse width modulation and constant current reduction as discussed above and below. As further discussed below, the dimming process can be represented by executable code or software stored in firmware or other appropriate memory 201 associated with the microcontroller 200, so that the microcontroller 200 can readily access and execute the code.

The microcontroller 200 has two outputs 290, 295. The output 295 of the microcontroller 200 feeds a pulse width modulation branch 285 of the driver 100. Meanwhile, the output 290 of the microcontroller 200 feeds a constant current reduction branch 280 of the driver 100.

The constant current reduction branch 280 includes a digital-to-analog converter 205 that feeds a target reference signal to a constant current reduction controller 210. More specifically, the microcontroller 200 sends a digital signal to the digital-to-analog converter 205 over the output 290. The digital-to-analog converter 205 then transforms that digital signal into a corresponding analog signal, typically a voltage that represents a target current flowing through the light emitting diode 105.

The constant current reduction controller 210 receives a voltage from a sense resistor 275 indicative of the current flowing through the light emitting diode 105. The constant current reduction controller 210 compares the voltage produced by the digital-to-analog converter 205 to the voltage across the sense resistor 275. The constant current reduction controller 210 then uses the buck/boost switches 215 to adjust the current flowing the light emitting diode 105 (which flows through the sense resistor 275) until the voltages match. When the voltages match, the light emitting diode 105 is receiving the target amount of current and thus produces the target level of light as set by the dimmer switch 100. Thus, the sense resistor 275 provides a feedback control signal.

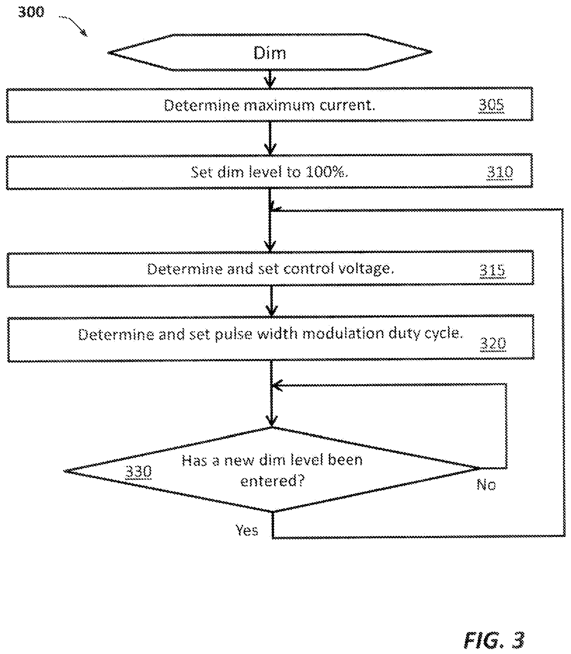

Turning now to Figure 3, this figure illustrates an example of a process 300 for controlling electricity for a light emitting diode 105 in connection with dimming in accordance some embodiments of the disclosure. As discussed above, process 300 can implement a combination of constant current reduction and pulse width modulation. Instructions for the process 300 can be stored in firmware 201 or other memory associated with the microcontroller 200 and executed by a microprocessor of the microcontroller 200.

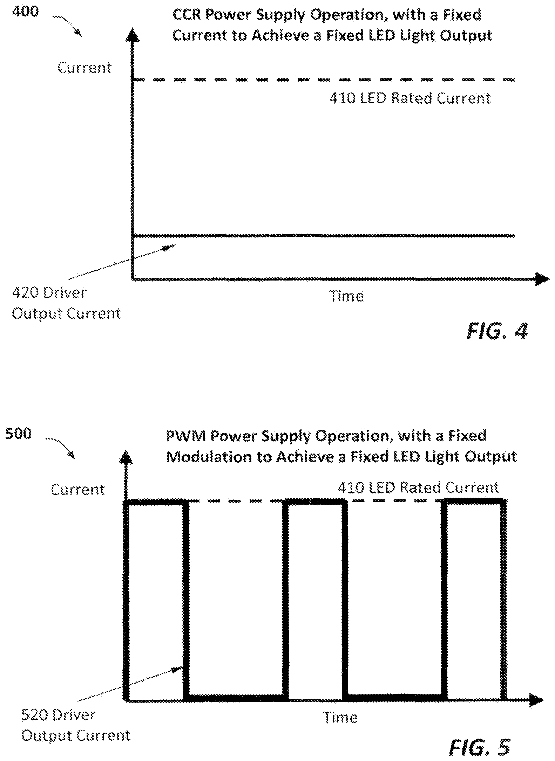

At block 305 of process 300, maximum current is determined. Maximum current may be determined from a specification sheet provided by a manufacturer of the light emitting diode 105 or via laboratory testing, for example. In an example embodiment, the maximum current equates to a rated current 410, as illustrated in Figures 4 and 5 and discussed below.

At block 310, the dim level for the light emitting diode(s) 105 is set to a predetermined value, which is illustrated as 100 percent. Execution of block 310 can be viewed as initializing process 300.

At block 315, the microcontroller 200 determines and sets a control voltage according to diming input from the dimmer switch 110, as discussed above. For example, a person may manually manipulate the dimmer switch 110, causing the dimmer switch to provide a command dimming input to the microcontroller. The input is initialized as 100 percent per block 310, and is updated based on inquiry step 330, discussed below.

At block 320, the microcontroller 200 sets an appropriate pulse width modulation duty cycle in order to achieve the desired illumination as discussed above. The pulse width modulation duty cycle can set a pulse width to achieve a target light output, for example.

Inquiry block 330 determines if the dimming level has been changed, for example by a new manual entry at the dimmer switch 110. If the dimming setting remains unchanged, process 300 iterates the inquiry. When a new diming setting is detected, process 300 loops back to block 315 and executes blocks 315 and 320 to implement constant current reduction and/or pulse width modulation for precise dimming of the luminaire 120.

Turning now to Figure 4, this figure illustrates an example plot 400 for operating the light emitting diode 105 under a constant current reduction mode in connection with dimming in accordance some embodiments of the disclosure. As discussed above, the lighting system 150 can practice constant current reduction to control intensity above a threshold, for example.

As illustrated in plot 400, the light emitting diode 105 has a maximum or rated current 410, at or below which the constant current is supplied. In the plot 400, the driver output current 420 is set to a specific value that causes the light emitting diode 105 to produce a corresponding level of light. As illustrated, the driver maintains the driver output current 420 at this value for the time span illustrated in Figure 4. To change the light output from the light emitting diode 105, the driver 100 will increase or decrease the driver output current 420. The changes to the driver output current 420 may be ramped either in a smooth or linear fashion, or stepwise, for example.

Turning now to Figure 5, this figure illustrates an example plot 500 for operating the light emitting diode 105 under a pulse width modulation mode in connection with dimming in accordance some embodiments of the disclosure. As discussed above, the lighting system 150 can practice pulse width modulation to control intensity below a threshold, for example.

As illustrated in plot 500, the light emitting diode 105 has a maximum or rated current 410, at which the driver 100 pulses the driver output current 520. In the illustrated embodiment, the driver output current 520 steps or switches between an off state and an on state at the rated current 401. Accordingly, the light emitting diode 105 is effectively switching or cycling off and on. The fraction of time that the light emitting diode 105 is in the on state during a given period of time determines the average intensity for that period of time and thus perceived intensity.

In the plot 500, the pulse width modulation of the driver output current 520 is set to a specific value that causes the light emitting diode 105 to produce a corresponding level of light. As illustrated, the driver maintains the driver output current 420 at this value for the time span illustrated in Figure 5. To change the light output from the light emitting diode 105, the driver 100 increases or decreases the amount of time that the driver output current 420 is in the on state relative to the off state. The driver 100 may increase or decrease the duration of each pulse to increase or decrease average light intensity from the light emitting diode 105, for example.

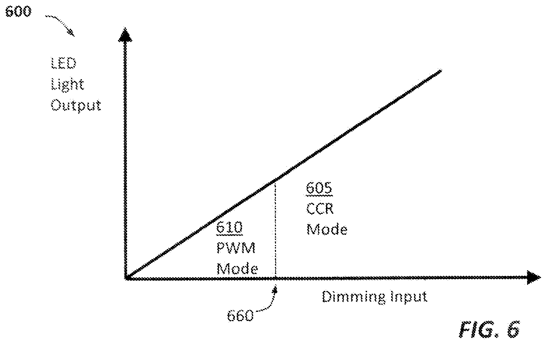

Turning now to Figure 6, this figure illustrates an example plot 600 for operating the light emitting diode 105 under a combination of pulse width modulation and constant current reduction modes 605, 610 in accordance some embodiments of the disclosure. As illustrated in the plot 600, the driver 100 operates the light emitting diode 105 under the pulse width modulation mode 610 for lower intensities and under the constant current reduction mode 605 for higher intensities.

In one example embodiment, the transition 660 between the pulse width modulation mode 610 and the constant current reduction mode 605 can occur at a light level below 10 percent of maximum light output, such as in a range of approximately 0.25 percent of maximum to approximately 5 percent of maximum. Various other ranges and values may be utilized in some applications. Input from the dimmer switch 110 may trigger the transition 660, for example.

## Claims

1. A driver (100) comprising:
an input configured to receive a dimming signal;
an output configured to emit electricity for powering at least one light emitting diode (105) according to the dimming signal; and
a circuit configured to produce the electricity, the circuit being-connected to the input and the output and comprising:
a microcontroller (200);
**characterized by** the circuit further comprising
a constant current reduction branch (280) configured to control an intensity of the at least one emitting diode (105) above a threshold, wherein the constant current reduction branch (280) is configured to be electrically coupled between a first output (290) of the microcontroller (200) and the output;
a pulse width modulation branch (285) configured to control the intensity of the at least one light emitting diode (105) below a threshold, wherein the pulse width modulation branch (285) is configured to be electrically coupled between a second output (295) of the microcontroller (200) and the output; and
a memory (201) configured to store a program for execution by the microcontroller (200), the program comprising instructions for performing the steps of:
determining a level of constant current reduction and a level of pulse width modulation according to the received dimming signal; and
instructing the constant current reduction branch (280) and the pulse width modulation branch (285) to produce the electricity respectively utilizing the determined levels of constant current reduction and pulse width modulation.

2. The driver (100) of Claim 1, wherein the output comprises:
a first port (LED+) configured for coupling to a positive side of the at least one light emitting diode (105); and
a second port (LED-) configured for coupling to a negative side of the least one light emitting diode (105), wherein
the pulse width modulation branch (285) is configured to be electrically coupled between the second output (295) of the microcontroller (200) and the second port (LED-); and
the constant current reduction branch (280) is configured to be electrically coupled between the first output (290) of the microcontroller (200) and the first port (LED+).

3. The driver (100) of Claim 1, wherein the circuit further comprises:
a digital-to-analog converter (205) configured to be connected to an output of the microcontroller (200);
a constant current reduction controller (210) configured to be connected to an output of the digital-to-analog converter (205); and
buck/boost switches (215) configured to be connected to an output of the constant current reduction controller (210).

4. The driver (100) of claim 3, wherein the constant current reduction controller (210) is configured to be connected to a sense resistor (275).

5. The driver (100) of Claim 1, wherein determining the level of constant current reduction and the level of pulse width modulation according to the received dimming signal comprises:
if the received dimming signal is lower than the threshold, setting the level of constant current reduction to zero and setting the level of pulse width modulation to a value other than zero; and
if the received dimming signal is above the threshold, setting the level of pulse width modulation to zero and setting the level of constant current reduction to a value other than zero.

6. The driver (100) of Claim 1, wherein producing the electricity utilizing the determined levels of constant current reduction and pulse width modulation- comprises feeding current to the at least one light emitting diode (105) to cause the light emitting diode (105) to produce a target level of illumination.

7. A luminaire (120) comprising the driver (100) of claim 1 and at least one light emitting diode (105).

## Patentansprüche

1. Treiber (100), umfassend:
einen Eingang, der so ausgelegt ist, dass er ein Dimmsignal empfängt;
einen Ausgang, der so ausgelegt ist, dass er gemäß dem Dimmsignal Elektrizität abgibt, um mindestens eine Leuchtdiode (105) mit Leistung zu versorgen; und
eine Schaltung, die so ausgelegt ist, dass sie die Elektrizität erzeugt, wobei die Schaltung mit dem Eingang und dem Ausgang verbunden ist und umfasst:
eine Mikrosteuerung (200);
**dadurch gekennzeichnet, dass** die Schaltung weiter umfasst
einen Konstantstrom-Reduktionszweig (280), der so ausgelegt ist, dass er eine Intensität der mindestens einen Leuchtdiode (105) oberhalb einer Schwelle steuert, wobei der Konstantstrom-Reduktionszweig (280) so ausgelegt ist, dass er elektrisch zwischen einen ersten Ausgang (290) der Mikrosteuerung (200) und den Ausgang gekoppelt werden kann;
einen Pulsweiten-Modulationszweig (285), der so ausgelegt ist, dass er die Intensität der mindestens einen Leuchtdiode (105) unterhalb einer Schwelle steuert, wobei der Pulsweiten-Modulationszweig (285) so ausgelegt ist, dass er elektrisch zwischen einen zweiten Ausgang (295) der Mikrosteuerung (200) und den Ausgang gekoppelt werden kann; und
einen Speicher (201), der so ausgelegt ist, dass er ein Programm zur Ausführung durch die Mikrosteuerung (200) speichert, wobei das Programm Anweisungen zum Durchführen der folgenden Schritte umfasst:
Bestimmen eines Grades an Konstantstrom-Reduktion und eines Grades an Pulsweitenmodulation gemäß dem empfangenen Dimmsignal; und
Anweisen des Konstantstrom-Reduktionszweiges (280) und des Pulsweiten-Modulationszweiges (285) die Elektrizität jeweils unter Verwendung der bestimmten Grade an Konstantstrom-Reduktion und Pulsweitenmodulation zu erzeugen.

2. Treiber (100) nach Anspruch 1, wobei der Ausgang umfasst:
einen ersten Anschluss (LED+), der so ausgelegt ist, dass er mit einer positiven Seite der mindestens einen Leuchtdiode (105) koppelt; und
einen zweiten Anschluss (LED-), der so ausgelegt ist, dass er mit einer negativen Seite der mindestens einen Leuchtdiode (105) koppelt, wobei
der Pulsweiten-Modulationszweig (285) so ausgelegt ist, dass er elektrisch zwischen den zweiten Ausgang (295) der Mikrosteuerung (200) und den zweiten Anschluss (LED-) gekoppelt werden kann; und
der Konstantstrom-Reduktionszweig (280) so ausgelegt ist, dass er elektrisch zwischen den ersten Ausgang (290) der Mikrosteuerung (200) und den ersten Anschluss (LED+) gekoppelt werden kann.

3. Treiber (100) nach Anspruch 1, wobei die Schaltung weiter umfasst:
einen Digital-Analog-Wandler (205), der so ausgelegt ist, dass er mit einem Ausgang der Mikrosteuerung (200) verbunden werden kann;
eine Konstantstrom-Reduktionssteuerung (210), die so ausgelegt ist, dass sie mit einem Ausgang des Digital-Analog-Wandlers (205) verbunden werden kann; und
Buck/Boost-Schalter (215), die so ausgelegt sind, dass sie mit einem Ausgang der Konstantstrom-Reduktionssteuerung (210) verbunden werden können.

4. Treiber (100) nach Anspruch 3, wobei die Konstantstrom-Reduktionssteuerung (210) so ausgelegt ist, dass sie mit einem Erfassungswiderstand (275) verbunden werden kann.

5. Treiber (100) nach Anspruch 1, wobei das Bestimmen des Grades an Konstantstrom-Reduktion und des Grades an Pulsweitenmodulation gemäß dem empfangenen Dimmsignal umfasst:
wenn das empfangene Dimmsignal niedriger ist als die Schwelle, Einstellen des Grades an Konstantstrom-Reduktion auf null und Einstellen des Grades an Pulsweitenmodulation auf einen Wert ungleich null; und
wenn das empfangene Dimmsignal oberhalb der Schwelle liegt, Einstellen des Grades an Pulsweitenmodulation auf null und Einstellen des Grades an Konstantstrom-Reduktion auf einen Wert ungleich null.

6. Treiber (100) nach Anspruch 1, wobei das Erzeugen der Elektrizität unter Verwendung der bestimmten Grade an Konstantstrom-Reduktion und Pulsweitenmodulation das Einspeisen von Strom in die mindestens eine Leuchtdiode (105) umfasst, um die Leuchtdiode (105) dazu zu bringen, einen Ziel-Beleuchtungsgrad zu erzeugen.

7. Leuchte (120), die den Treiber (100) nach Anspruch 1 und mindestens eine Leuchtdiode (105) umfasst.

## Revendications

1. Pilote (100) comprenant :
une entrée configurée pour recevoir un signal de gradation ;
une sortie configurée pour émettre de l'électricité pour allumer au moins une diode électroluminescente (105) selon le signal de gradation ; et
un circuit configuré pour produire l'électricité, le circuit étant connecté à l'entrée et à la sortie et comprenant :
un microdispositif de commande (200) ;
**caractérisé par** le circuit comprenant en outre
une branche de réduction de courant constant (280) configurée pour commander une intensité de la au moins une diode électroluminescente (105) au-dessus d'un seuil,
dans lequel la branche de réduction de courant constant (280) est configurée pour être électriquement couplée entre une première sortie (290) du microdispositif de commande (200) et la sortie ;
une branche de modulation de largeur d'impulsion (285) configurée pour commander l'intensité de la au moins une diode électroluminescente (105) en dessous d'un seuil,
dans lequel la branche de modulation de largeur d'impulsion (285) est configurée pour être électriquement couplée entre une seconde sortie (295) du microdispositif de commande (200) et la sortie ; et
une mémoire (201) configurée pour stocker un programme pour être exécuté par le microdispositif de commande (200), le programme comprenant des instructions pour effectuer les étapes suivantes :
déterminer un niveau de réduction de courant constant et un niveau de modulation de largeur d'impulsion selon le signal de gradation reçu ; et
ordonner à la branche de réduction de courant constant (280) et la branche de modulation de largeur d'impulsion (285) de produire l'électricité en utilisant respectivement les niveaux déterminés de réduction de courant constant et de modulation d'impulsion de largeur.

2. Pilote (100) selon la revendication 1, dans lequel la sortie comprend :
un premier port (LED+) configuré pour se coupler à un côté positif de la au moins une diode électroluminescente (105) ; et
un second port (LED-) configuré pour se coupler à un côté négatif de la au moins une diode électroluminescente (105),
dans lequel la branche de modulation de largeur d'impulsion (285) est configurée pour être électriquement couplée entre la seconde sortie (295) du microdispositif de commande (200) et le second port (LED-) ; et
la branche de réduction de courant constant (280) est configurée pour être électriquement couplée entre la première sortie (290) du microdispositif de commande (200) et le premier port (LED+).

3. Pilote (100) selon la revendication 1, dans lequel le circuit comprend en outre :
un convertisseur numérique-analogique (205) configuré pour être connecté à une sortie du microdispositif de commande (200) ;
un dispositif de commande de réduction de courant constant (210) configuré pour être connecté à une sortie du convertisseur numérique-analogique (205) ; et
des commutateurs Buck-Boost (215) configurés pour être connectés à une sortie du dispositif de commande de réduction de courant constant (210).

4. Pilote (100) selon la revendication 3, dans lequel le dispositif de commande de réduction de courant constant (210) est configuré pour être connecté à une résistance de détection (275)

5. Pilote (100) selon la revendication 1, dans lequel le fait de déterminer le niveau de réduction de courant constant et le niveau de modulation de largeur d'impulsion selon le signal de gradation reçu comprend :
si le signal de gradation reçu est inférieur au seuil, le réglage de niveau de réduction de courant constant à zéro et le réglage du niveau de modulation de largeur d'impulsion à une valeur autre que zéro ; et
si le signal de gradation reçu est au-dessus du seuil, le réglage du niveau de modulation de largeur d'impulsion à zéro et le réglage du niveau de réduction de courant constant à une valeur autre que zéro.

6. Pilote (100) selon la revendication 1, dans lequel la production de l'électricité en utilisant les niveaux déterminés de réduction de courant constant et de modulation de largeur d'impulsion comprend l'alimentation en courant de la au moins une diode électroluminescente (105) pour amener la diode électroluminescente (105) à produire un niveau cible d'illumination.

7. Luminaire (120) comprenant le pilote (100) selon la revendication 1 et au moins une diode électroluminescente (105).
